# EUROPEAN PATENT APPLICATION

(11) **EP 3 632 736 A1**
(43) Date of publication of application: **08.04.2020**
(21) Application number: 18198539.1
(22) Date of filing: 04.10.2018
(51) Int. Cl.: B60N 2/01, B64D 11/06, B60N 2/30, B60N 2/64

(54) **VEHICLE SEAT ASSEMBLY**

(71) Applicant: United Aerospace Limited, Milford Haven Pembrokeshire SA73 3JP (GB)
(72) Inventor: BURKS, Gareth, Pembroke Dock, dyfed SA71 4RE (GB)
(74) Representative: Baker, Thomas Edward

(57) **Abstract**

The present invention relates to a vehicle seat assembly, particularly but not exclusively to an aircraft seat assembly, comprising a first and a second seat secured together. Each of the first and second seats has a seat portion and a backrest with each seat portion extending forwardly from a respective backrest, wherein the backrest of the first seat is positioned forwardly and to the side of the backrest of the second seat. The present invention seeks to address the limitations of accommodating passengers in adjacent seats in a row of seats comprising two or more seats.

## Description

The present invention relates to a vehicle seat assembly, particularly but not exclusively to an aircraft seat assembly.

Vehicle seat assemblies typically used in aircraft and trains for example comprise a plurality of seats provided in a side by side configuration, where each seat is in a fixed position relative to the adjoining seat. An armrest is often provided separating the seats for the comfort of an occupant. The space taken up by the seats is minimised in order to maximise the number of passengers transported meaning space is at a premium. This means that seats, made up of a seat portion and a backrest, are aligned in a side by side configuration with little or no space between adjoining seats. The result is that when occupants are sat in adjoining seats, their shoulders and elbows typically extend into the space of an adjoining seat, thereby coming into contact with an occupant of that seat. The same issue arises with an occupant's elbows which naturally fall onto the armrest, however the armrest is only suitable for accommodating one of the occupants meaning the occupant of an adjacent seat is forced to bring their elbows inwardly to rest on their laps.

The present invention seeks to address the limitations of accommodating passengers in adjacent seats in a row of seats comprising two or more seats.

According to the present invention there is a vehicle seat assembly comprising a first and a second seat secured together, each of the first and second seats having a seat portion and a backrest with each seat portion extending forwardly from a respective backrest, wherein the backrest of the first seat is positioned forwardly and to the side of the backrest of the second seat.

It will be understood that by positioning one of the seats forwardly of the other seat, comfort for occupants of adjacent seats is increased. An occupant's shoulders are misaligned with respect to an adjacent occupant meaning they is no impingement of one passenger upon another. In addition, occupant's elbows will also be misaligned on any armrest present between adjacent seats meaning an armrest can be readily shared with both occupants who are able to position their elbows on the armrest again resulting in improved comfort.

The first and second seats are laterally offset, and may be described as being staggered relative to one another. It will be appreciated that the first and second seats are oriented in the same direction, typically facing forwardly in the vehicle.

The vehicle is preferably an aircraft, and the present invention is preferably an aircraft seat assembly.

Each seat portion is preferably defined between a forward edge and a rearward edge, and wherein the forward edge of the first seat portion is positioned forwardly of the forward edge of the second seat portion.

The backrest of the first seat is preferably positioned forwardly of the backrest of the second seat portion by more than 8cm, preferably between 8.5cm and 11.5cm, and more preferably approximately 9cm. The rearward, and preferably forward edge, of the first seat portion are also preferably positioned forwardly of the respective rearward, and preferably forward edge of the second seat portion by the same preferred distances. Such preferred distances are selected to ensure comfort for the seat occupants in addition to ensuring that occupants who are travelling together do not feel alienated from one another.

A support structure is preferably provided for supporting the first and second seat, the support structure being arranged to be secured to a vehicle. The support structure is arranged to support the seats above the floor, wherein the support structure comprises a plurality of support legs comprising at least one forward support leg and at least one rearward support leg.

The first seat portion preferably comprises a forward seat portion and a rearward seat portion, the forward seat portion reconfigurable between a first configuration whereby the forward seat portion is in a side by side configuration with the rearward seat portion, and a second configuration wherein the forward seat portion is displaced to be at least partially above the rearward seat portion. This provides a significant benefit when utilising offset positioning of the first and second seat. This feature means that when embarking or disembarking the vehicle there is significant space for a passenger to access their designated seating area. In addition and particularly in aircraft, this space allows a passenger to stand while organising their belongings meaning that total speed of embarkation and disembarkation is reduced. The ability to reconfigure the seat portion is particularly important when utilising an offset between adjacent seats of greater than 8cm, where without such a feature there would be reduced access due to the same positioning of the respective seats in a seat assembly in the row in front.

The seat assembly may comprise a third seat having a seat portion and a backrest with the seat portion extending forwardly from the backrest, wherein the backrest of the third seat is secured relative to the first and second seat. The third seat is preferably secured adjacent the first seat. The backrest of the third seat is preferably secured to the side of the first seat, and is preferably positioned rearwardly of the backrest of the first seat. The backrest of the third seat is preferably aligned with the backrest of the second seat. Accordingly in a seat assembly having three seats, the first seat or central seat is forwardly offset relative to the end seats. This ensures maximised comfort for the occupants.

The seat assembly preferably comprises a bracket arrangement positioned intermediate the first and second seats having a first mounting formation for mounting the second seat to the bracket arrangement and a second mounting formation offset forwardly from the first mounting formation for mounting the first seat to the bracket arrangement. The bracket arrangement is beneficially sandwiched between the first and the second seat.

Aspects of the present invention will now be described by way of example only with reference to the accompanying drawings where:
Figure 1a is a schematic perspective representation of an illustrative embodiment of the present invention, and Figures 1b, c and d are plan, side and front views respectively.
Figure 2a is a schematic perspective representation of an illustrative embodiment of the present invention, Figure 2b is a magnified representation of a bracket for securing a first and second seat together, Figure 2c is a schematic plan view of the seat assembly of Figure 2a together with a magnified representation of the bracket for securing a first and second seat together.
Figure 3 is a schematic representation of a seat assembly according to an exemplary embodiment comprising three seats with the seat portions of two of the seats shown in a folded configuration.

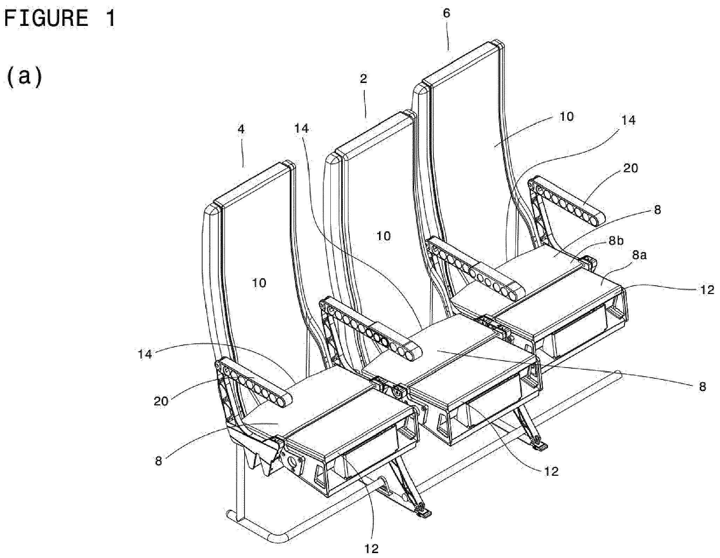

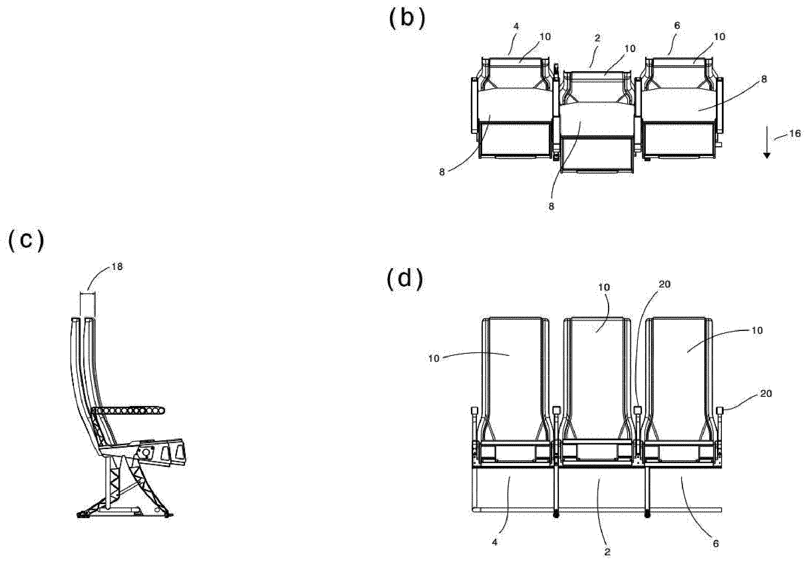

Referring to Figure 1 there is a schematic illustrative embodiment of the present invention. Shown is an illustrative embodiment in which there are three seats forming a row however the present invention is only limited to two or more adjoined seats.

Each seat 2, 4, 6 comprises a separate seating location for a vehicle passenger, and comprises a seat portion 8 and a backrest 10. The backrest 10 and seat portion 8 of the first seat 2 is offset forwardly from the respective backrests of the second and third seats 4, 6, meaning the seating positions are effectively staggered. The seat portions 8 comprise a leading edge 12 and a trailing edge 14 and the leading edge 12 of the seat portion 8 of the first seat 2 extends forwardly beyond the leading edge 12 of the adjacent seats 4, 6, and the trailing edge 14 of the first seat 2 extends beyond the trailing edge 14 of the trailing edge 14 of the second and third seats 4, 6. It will be appreciated that an alternative configuration whereby there are two adjacent seats 2, 4 is also envisaged whereby the first seat 2 is offset forwardly of the second seat 4. In addition, an alternative embodiment is envisaged whereby the first seat 2 is an end seat, and the first and third seats 2, 6 are offset forwardly from the second seat 4.

As best shown in Figure 1b in plan view, the forwardly direction is indicated by arrow 16. With reference to Figure 1c, the distance of offset between the backrest 10 (and seat portion 8) of the forwardly offset seat 2 is represented by distance shown by reference numeral 18. The distance 18 is more than 8cm, preferably between 8.5cm and 11.5cm, and more preferably approximately 9cm. The forward edge of the first seat portion is also preferably positioned forwardly of the forward edge of the second seat portion by the same preferred distance. The preferred distance of 9cm is selected to ensure comfort for the seat occupants in addition to ensuring that occupants who are travelling together do not feel alienated from one another.

Armrests 20 are provided between adjacent seats and also at opposing ends of a row of seats. The armrests 20 are located between adjacent seats where one seat is offset relative to the adjacent seat. The armrests 20 are arranged to be elongated to accommodate the arms of occupants of both seats comfortably, where the occupant of the rearward seat will naturally position their arms towards the proximal end of the armrest, and the occupant of the forward seat will naturally position their arm towards the distal end of the armrest.

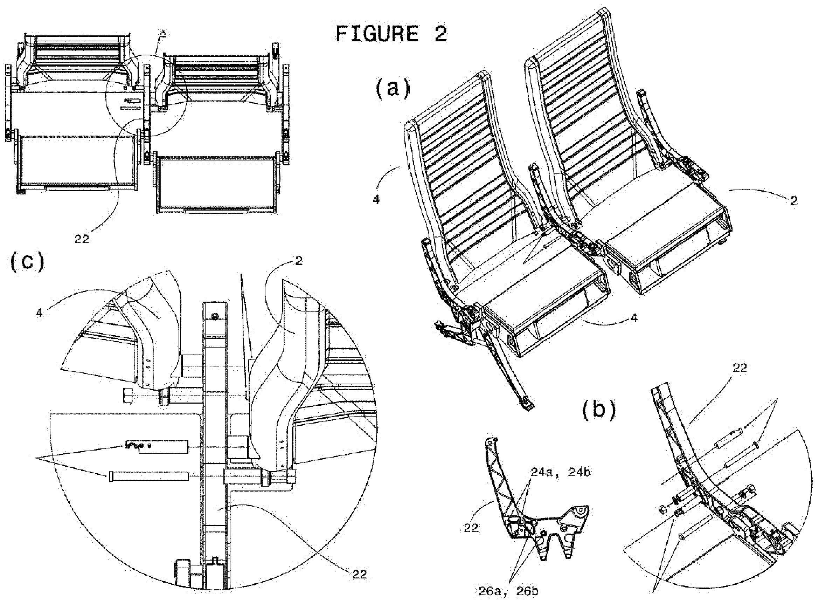

Referring now to Figure 2a-c a seat assembly is presented showing a first and second seat 2, 4 only. The seat assembly also comprises a bracket arrangement 22 positioned intermediate the first and second seats 2,4 (and second and third seats 4,6 if present) having a first mounting formation in the form of first and second mounting pin apertures 24a, 24b for mounting the second seat to the bracket arrangement 22 and a second mounting formation offset from the first mounting formation in the form of first and second mounting pin apertures 26a, 26b for mounting the first seat to the bracket arrangement 22. The first and second mounting pin apertures 26a, 26b for mounting the first seat to the bracket arrangement 22 are offset forwardly from the first and second mounting pin apertures 24a, 24b for mounting the second seat to the bracket arrangement 22.

The bracket arrangement 22 is beneficially sandwiched between the first and the second seat 2, 4. Each of the bracket arrangements also act as a support for an armrest 20, where the armrest 20 is pivotally mounted to the bracket arrangement 22.

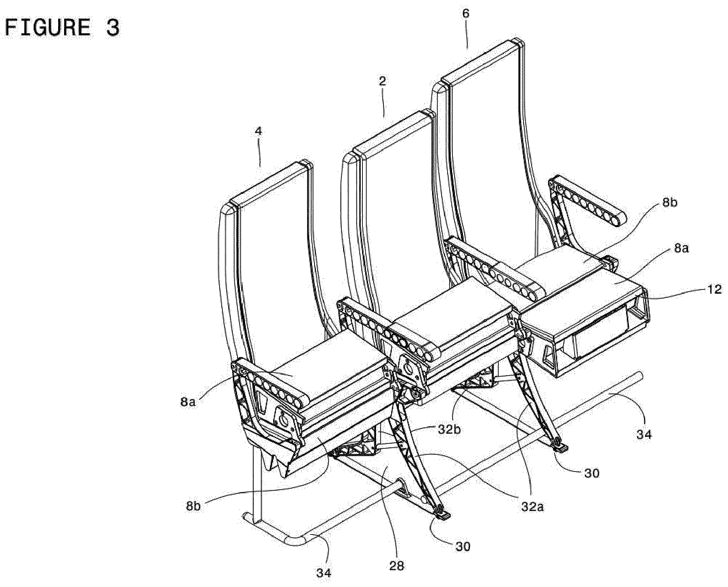

Figure 3 is a schematic representation of a seat assembly according to an exemplary embodiment comprising three seats with the seat portions of two of the seats shown in a folded configuration. The seats comprise a forward seat portion 8a and a rearward seat portion 8b wherein the forward seat portion 8a is reconfigurable between a first configuration whereby the forward seat portion 8a is in a side by side configuration with the rearward seat portion 8b, and a second configuration wherein the forward seat portion 8a is displaced to be at least partially above the rearward seat portion. This means that the seat defines a seat footprint in the first configuration, and the seat support structure is arranged such that in the second configuration a standing space for a person is defined within the seat footprint. This provides a significant benefit that the effect of the offset forwardly of the first seat 2 which would otherwise make access for a passenger to their allocated seat more difficult is mitigated and improved compared to a traditional single piece seat portion in a fixed orientation and position. The forward seat portion 8a is pivotally mounted relative to the rearward seat portion 8b allowing ease of reconfiguration for a passenger.

Referring to Figure 3 a support structure 28 is provided for supporting the first and second seat 2, 4, the support structure 28 being arranged to be secured to a vehicle at mounting positions 30. The support structure is arranged to support the seats above the floor, wherein the support structure comprises a plurality of support legs 32 comprising at least one forward support leg 32a and at least one rearward support leg 32b. It is beneficial that the support structure is arranged such that the leading edge 12 of the forward seat portion 8a has no support structure directly beneath a portion of the leading edge, and wherein the forward seat portion 8a defines a footprint in the first configuration. There is no support structure beneath a majority of the forward seat portion footprint. The leading edge 12 of the forward seat portion 8a overhangs the support structure, thus giving ease of access to the passengers without significant impedance from the support structure. A "luggage bar" 34 may be provided adjacent to the floor which may be a regulatory requirement in certain applications such as in aircraft for retaining luggage in a position under a seat. The bracket arrangement(s) 22 is arranged to be secured to the support structure.

Aspects of the present invention have been described by way of example only and it will be appreciated to the skilled addressee that modifications and variations may be made without departing from the scope of protection afforded by the appended claims.

## Claims

1. A vehicle seat assembly comprising a first and a second seat secured together, each of the first and second seats having a seat portion and a backrest with each seat portion extending forwardly from a respective backrest, wherein the backrest of the first seat is positioned forwardly and to the side of the backrest of the second seat.

2. A vehicle seat assembly according to claim 1 wherein the vehicle seat assembly is an aircraft seat assembly.

3. A vehicle seat assembly according to any preceding claim wherein each seat portion is defined between a forward edge and a rearward edge, and wherein the forward edge of the first seat portion is positioned forwardly of the forward edge of the second seat portion.

4. A vehicle seat assembly according to any preceding claim wherein the backrest of the first seat is positioned forwardly of the backrest of the second seat portion by more than 8cm, preferably between 8.5cm and 11.5cm, and more preferably approximately 9cm.

5. A vehicle seat assembly according to any preceding claim wherein a support structure is provided for supporting the first and second seat, the support structure being arranged to be secured to a vehicle.

6. A vehicle seat assembly according to claim 5 wherein the support structure is arranged to support the seats above the floor, wherein the support structure comprises a plurality of support legs comprising at least one forward support leg and at least one rearward support leg.

7. A vehicle seat assembly according to any preceding claim wherein the first seat portion preferably comprises a forward seat portion and a rearward seat portion, the forward seat portion reconfigurable between a first configuration whereby the forward seat portion is in a side by side configuration with the rearward seat portion, and a second configuration wherein the forward seat portion is displaced to be at least partially above the rearward seat portion.

8. A vehicle seat assembly according to any preceding claim comprising a third seat having a seat portion and a backrest with the seat portion extending forwardly from the backrest, wherein the backrest of the third seat is secured relative to the first and second seat.

9. A vehicle seat assembly according to claim 8 wherein the backrest of the third seat is positioned rearwardly of the backrest of the first seat.

10. A vehicle seat assembly according to any preceding claim further comprising a bracket arrangement positioned intermediate the first and second seats having a first mounting formation for mounting the second seat to the bracket arrangement and a second mounting formation offset forwardly from the first mounting formation for mounting the first seat to the bracket arrangement.
